# FASCICULE DE BREVET EUROPEEN

(11) **EP 3 375 133 B1**
(45) Date de publication et mention de la délivrance du brevet: **01.01.2020**
(21) Numéro de dépôt: 16794342.2
(22) Date de dépôt: 10.11.2016
(51) Int. Cl.: H04L 9/32, H04L 9/00, H04L 29/06

(54) **PROCEDE DE SECURISATION ET D'AUTHENTIFICATION D'UNE TELECOMMUNICATION**
VERFAHREN ZUR SICHERUNG UND AUTHENTIFIZIERUNG EINER TELEKOMMUNIKATION
METHOD FOR SECURING AND AUTHENTICATING A TELECOMMUNICATION

(30) Priorité: 13.11.2015 FR 1560916
(43) Date de publication de la demande: 19.09.2018
(73) Titulaire: Airbus CyberSecurity SAS, 78990 Elancourt (FR)
(72) Inventeur: BRUN, Paul-Emmanuel, 78590 Noisy le Roi (FR); COHEN, Raphaël, 92100 Boulogne Billancourt (FR); PETESQUE, Nicolas, 78760 Jouars-Pontchartrain (FR)
(74) Mandataire: Cabinet Camus Lebkiri
(86) Numéro de dépôt international: PCT/EP2016/077356
(87) Numéro de publication internationale: WO 2017/081208

(56) Documents cités:
- SHENG JIANG HUAWEI TECHNOLOGIES CO ET AL: "Secure DHCPv6 Using CGAs; draft-ietf-dhc-secure-dhcpv6-07.txt", SECURE DHCPV6 USING CGAS; DRAFT-IETF-DHC-SECURE-DHCPV6-07.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 14 septembre 2012 (2012-09-14), pages 1-34, XP015087293,
- DROMS (ED) R ET AL: "Dynamic Host Configuration Protocol for IPv6 (DHCPv6); draft-ietf-dhc-dhcpv6-27.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, vol. dhc, no. 27, 22 octobre 2003 (2003-10-22), XP015016990, ISSN: 0000-0004

## Description

### DOMAINE

Le domaine de l'invention concerne la sécurisation de communications entre deux entités communicantes, telles qu'un client et un serveur ayant des interfaces réseaux. Plus particulièrement, l'invention se rapporte aux communications sécurisées ne nécessitant pas de gestion d'états ou de l'établissement d'une session de communication que l'on souhaite sécuriser. Enfin, le domaine de l'invention concerne les télécommunications comprenant une authentification permettant l'établissement de communications sécurisées ad hoc offrant une souplesse d'architecture en limitant l'usage d'un tiers d'authentification.

### ETAT DE L'ART

Dans le domaine des services web, le style d'architecture logicielle de type REST, dont l'acronyme désigne « Representational State Transfer », s'est largement répandu en raison de sa simplicité de mise en œuvre et d'intégration dans des systèmes distribués. Dans une application web reposant sur une architecture de type REST, un poste client fait appel à des ressources réparties sur un ou plusieurs postes serveur à l'aide de requêtes utilisant par exemple le protocole http, dont l'acronyme désigne « Hypertext Transfer Protocol », et faisant référence à une URI, dont la signification est « Uniform Resource Identifier », représentant l'adresse unique de la ressource sur le réseau. En réponse à cette requête, le serveur renvoie au poste client les ressources demandées généralement au format XML ou JSON. L'une des caractéristiques essentielles de l'architecture REST est de proscrire au niveau du serveur tout contexte de communication avec le poste client au-delà de la durée de réception de la requête. Ce mode de communication sans-état, également connu par l'appellation anglo-saxonne « stateless », garantit au poste serveur une capacité à monter en charge. En effet, ce dernier peut libérer immédiatement après la réception de la requête ses ressources nécessaires à la communication avec le poste client, les rendant ainsi disponibles pour une nouvelle communication et évitant la surcharge de ces ressources systèmes.

Dans le domaine de la sécurisation des télécommunications différentes techniques existent. Toutes reposent sur un mécanisme d'authentification permettant de sécuriser des échanges entre deux entités communicantes.

Parmi les solutions n'impliquant pas la mise en œuvre d'une session entre les deux entités, deux méthodes d'authentification sont répandues. Parmi ces méthodes, toutes engagent l'échange d'au moins un secret entre le serveur et un client. Le secret peut prendre la forme d'un mot de passe ou d'une clef. Dans la suite de la description, nous désignerons par secret l'un ou l'autre de ces cas.

Une première méthode d'authentification repose sur l'échange d'une clef API, c'est-à-dire d'un secret partagé entre deux entités communicantes. Dans ce cas, généralement un secret tel qu'un mot de passe est défini coté serveur et est transmis par la requête à destination d'un client. Ce mot de passe est alors échangé à chaque émission de requête entre les entités communicantes.

Un problème de cette solution est qu'une interception de la requête permet à un tiers de récupérer le secret partagé et d'accéder par la suite au serveur de données. Un risque est que l'accès au serveur soit usurpé par un tiers non autorisé qui peut alors partager des données sensibles.

Une seconde méthode d'authentification repose sur l'établissement d'une signature de clef API. Un secret est alors partagé initialement entre deux entités communicantes, par exemple, par une phase d'enrôlement entre les deux entités. Les secrets sont ensuite stockés du côté du client et du côté du serveur. Le secret est alors utilisé pour signer les messages qui sont ensuite émis. Un avantage est que le secret n'est pas partagé systématiquement lors de la transmission de chaque message entre deux entités communicantes. Cette solution limite les possibilités d'interception du secret. La signature permet d'authentifier les messages une fois reçu avec le secret qui est stocké dans l'entité communicante, mais qui n'est pas transféré pendant les échanges.

Un problème de cette solution est que les mots de passe / secrets doivent être stockés dans les entités. Or, généralement le stockage du secret est effectué en clair, c'est-à-dire de manière non chiffrée. Un danger est qu'une usurpation de la base de données du serveur par un tiers permette d'accéder aux secrets de tous les clients.

Parmi les solutions impliquant la mise en œuvre d'une session entre les deux entités, deux méthodes d'authentification sont répandues.

Une première méthode repose sur la technologie SAML désignant « Security Assertion Markup Language ». Cette méthode repose sur la définition d'un tiers d'authentification tel qu'un serveur d'authentification. Cette solution implique la mise en œuvre d'un système de gestion de clefs PKI, l'acronyme désignant « Public Key Infrastructure ». Cette méthode permet d'obtenir une bonne sécurité des échanges de données entre les entités communicantes. Cependant, elle est difficile à mettre en œuvre simplement car un tiers d'authentification doit être paramétré. En outre, elle est couteuse et nécessite l'établissement d'une session entre les entités et/ou l'échanges de certificats. Par ailleurs, le protocole XML est généralement employé dans cette méthode. Un inconvénient est que l'entête de sécurité de ce protocole est très verbeux et n'est pas adaptée à des communications à faible bande passante.

Une seconde solution repose sur le protocole HTTPs qui repose également sur un système de gestion de clefs PKI et sur l'échange de certificats. Cette solution offre également une bonne sécurité des échanges de données entre entités communicantes. En revanche, cette solution est couteuse et difficile à mettre en œuvre. En outre, elle implique un mécanisme d'échange de clefs préalable avec un tiers d'authentification. Ces méthodes peuvent se déployer sur des réseaux large bande mais sur des réseaux plus contraints, elles peuvent rencontrer quelques limitations lors de la mise en œuvre des échanges.

En outre, un problème d'un système de gestion de clef PKI est qu'il est difficile, voire impossible, du point de vue du serveur de suspendre un équipement pendant une durée déterminée ou indéterminée. Le tiers d'authentification possédant des droits, il est difficile de disposer d'une autonomie de gestion des révocations ou des suspensions de droits du point de vue du serveur de communication.

Le brevet US 8621598 B2 décrit un mécanisme s'appuyant sur une architecture REST, en revanche la solution impose la définition d'un jeton de session qui est transmis entre les entités communicantes. Dans cette solution, le jeton d'authentification est utilisé par le serveur pour échanger avec un serveur d'authentification autorisant ou non le transfert de données entre le client et le serveur. Cette solution implique la mise en œuvre d'un serveur d'authentification comprenant une base de données dans laquelle les clefs privées des équipements clients sont stockées.

Les documents suivants exposent des procédures d'authentification sécurisée au sein du protocole DHCPv6:
Sheng Jiang, Sean Shen: "Secure DHCPv6 Using CGAs; draft-ietf-dhc-secure-dhcpv6-07.txt", INTERNET ENGINEERING TASK FORCE (IETF); DHC Working Group; Update: RFC 3315, September 14, 2012;
R. Droms et al: "Dynamic Host Configuration Protocol for IPv6 (DHCPv6); draft-ietf-dhc-dhcpv6-27.txt",5. INTERNET ENGINEERING TASK FORCE (IETF); DHC Working Group, Internet Draft, 22 Oct 2003.

Il existe un besoin de définir une méthode de communication sécurisée pour l'échange de données entre deux entités communicantes qui soit simple à mettre en œuvre, qui ne s'appuie pas sur un serveur d'authentification tiers et qui n'implique pas la définition, la mise en œuvre et la gestion d'une session entre les entités communicantes.

Parmi les besoins de sécurisation de tels échanges de données, il existe un besoin de définir une méthode de communication qui soit robuste aux attaques de type rejeu, de type HDM, désignant une attaque de l'« homme du milieu » ou encore une attaque de type « eavesdropping », désignant un type « écoute clandestine ».

### RESUME DE L'INVENTION

L'invention vise à pallier aux inconvénients précités.

L'invention permet d'offrir un compromis entre un niveau de sécurité suffisant à mettre en œuvre entre des entités communicantes et une simplicité de mise en œuvre d'un certain niveau de sécurité permettant des échanges sans états entre lesdites entités. L'invention permet de s'affranchir d'échanges de certificats ou de l'établissement d'une session. En outre, le procédé de l'invention permet de s'affranchir d'un tiers d'authentification, tel qu'un serveur d'authentification.

Un objet de l'invention concerne un procédé de communication entre deux entités communicantes, selon la revendication indépendante 1.

Un avantage de l'invention est de permettre de sécuriser une liaison de données entre deux entités communicantes sans avoir à mettre en œuvre un tiers d'authentification, tel qu'un serveur d'authentification stockant des données d'authentification des entités communicantes. Dans le procédé de l'invention, seules les entités communicantes échangeant des données mettent en œuvre les mécanismes de sécurité de la liaison de données. En outre, le procédé de l'invention ne nécessite pas de gestion de session ou d'état entre les deux entités communicantes. Chaque message comporte les éléments d'identification, d'authentification et de sécurité assurant une liaison fiable.

Selon un mode de réalisation, l'ensemble de données à signer comprend une combinaison des données suivantes :
▪ l'identifiant de message ;
▪ 'identifiant utilisateur ;
▪ un mot de passe d'un compte utilisateur ;
▪ l'identifiant de l'équipement ;
▪ le profil de sécurité ;
▪ une information d'entêtes ou d'un champ de données de message représentative du protocole de transfert des données utiles ;
▪ les données utiles.

Selon un mode de réalisation, la première entité communicante comprend une mémoire pour stocker une clef publique d'une seconde entité communicante, le profil de sécurité comprenant :
▪ un premier paramètre indiquant la présence ou non d'un chiffrement des données utiles effectué à partir de la clef publique de la seconde entité communicante et ;
▪ un second paramètre indiquant la présence ou non d'une signature d'un ensemble de données à signer.

Selon un mode de réalisation, la première entité communicante comprend une mémoire pour stocker une clef publique d'une seconde entité communicante, le profil de sécurité comprenant :
▪ un premier paramètre indiquant la présence ou non d'un chiffrement des données utiles effectué à partir d'une clef symétrique et le cas échéant de la présence d'un chiffrement de la clef symétrique à partir de la clef publique de la seconde entité communicante et ;
▪ un second paramètre indiquant la présence ou non d'une signature d'un ensemble de données à signer.

Selon un mode de réalisation, le profil de sécurité comprend :
▪ Un troisième paramètre indiquant la présence ou non d'un chiffrement effectué à partir de la clef publique de la première entité communicante soit des données utiles soit d'une clef symétrique et ;
▪ Un quatrième paramètre indiquant la présence ou non d'une signature d'un ensemble de données à signer,
d'au moins un message devant être émis par une seconde entité communicante en réponse à un message reçu de la première entité communicante.

Selon un mode de réalisation, le serveur comprend des moyens d'accès à la mémoire stockant les données correspondantes aux identifiants clients et aux identifiants d'équipements de manière à révoquer ou suspendre un ou plusieurs équipement(s) ou client(s).

Un autre objet de l'invention concerne un procédé selon l'un des modes de réalisation précédents, comprenant préalablement l'exécution d'un procédé de génération d'une requête d'enrôlement par une première entité communicante à destination d'une seconde entité communicante. Le procédé de génération d'une requête d'enrôlement comprend :
▪ Une activation de la procédure d'enrôlement ;
▪ Une génération d'une requête d'enrôlement comportant un identifiant d'un équipement, un identifiant de l'utilisateur, un mot de passe de l'utilisateur et une clef publique de la première entité communicante ;
▪ Un chiffrement de la requête avec une clef publique de la seconde entité communicante et une émission de la requête d'enrôlement au moyen d'une interface de communication à destination de la seconde entité communicante.

Selon un mode de réalisation, le procédé de génération d'une requête d'enrôlement par une première entité communicante comprend préalablement :
▪ Une création d'un compte utilisateur comprenant un identifiant et un mot de passe ;
▪ L'enregistrement des données dudit compte utilisateur dans une mémoire de la seconde entité communicante ;
▪ Une acquisition d'une clef publique de la seconde entité communicante pour lequel la procédure d'enrôlement est engagée depuis la première entité communicante ;
▪ Une génération d'un couple de clefs asymétriques de la première entité communicante.

Selon un mode de réalisation, le procédé d'enrôlement comprend les étapes suivantes réalisées par la seconde entité communicante :
▪ Une réception d'une requête d'enrôle générée par un procédé de génération d'une requête d'enrôlement de l'invention ;
▪ Un déchiffrement des données de la requête d'enrôlement au moyen d'une clef privée de la seconde entité communicante;
▪ Une comparaison entre l'identifiant utilisateur reçu et le mot de passe utilisateur reçu avec des données de comptes clients stockés dans une mémoire de la seconde entité communicante;
▪ Un enregistrement de l'identifiant de l'équipement dans une mémoire de la seconde entité communicante ;
▪ Un enregistrement de la clef publique de la première entité communicante associée à l'identifiant de l'équipement dans une mémoire de la seconde entité communicante.

Selon un mode de réalisation, la seconde entité communicante met en œuvre les étapes du procédé d'enrôlement suivantes :
▪ un contrôle d'une date actuelle avec une date référence ;
▪ une génération d'un message à destination de la première entité communicante comprenant un code spécifique indiquant qu'un couple de clefs asymétriques doit être renouvelé ;
▪ une réception d'une nouvelle requête d'enrôlement générée par la première entité communicante selon le procédé d'enrôlement de l'invention.

Un autre objet de l'invention concerne une entité communicante comprenant au moins une mémoire, un calculateur et une interface de communication pour l'exécution du procédé de communication de l'invention et/ou du procédé d'enrôlement.

Un autre objet de l'invention concerne un programme d'ordinateur comportant un ensemble d'instructions pour la mise en œuvre du procédé de communication. Dans ce mode de réalisation, un support physique, tel qu'une mémoire, permet d'enregistrer les instructions et un calculateur permet de mettre en œuvre les étapes du procédé. Dans ce dernier cas, le programme d'ordinateur est configuré pour exécuter le procédé de l'invention sur un ordinateur, une tablette, un Smartphone ou plus généralement un équipement électronique intelligent comprenant une interface de communication.

Selon un mode de réalisation, le programme d'ordinateur est configuré pour former une API, désignant « Application Programming Interface ». Cette dernière peut être mise en œuvre dans un programme d'ordinateur au sein d'un procédé de gestion d'une interface de communication d'un équipement.

Selon un mode de réalisation, un programme d'ordinateur est également conçu pour comprendre des instructions et des moyens pour l'exécution du procédé d'enrôlement. Identiquement, ce programme d'ordinateur peut être conçu pour former une API.

### BREVE DESCRIPTION DES FIGURES

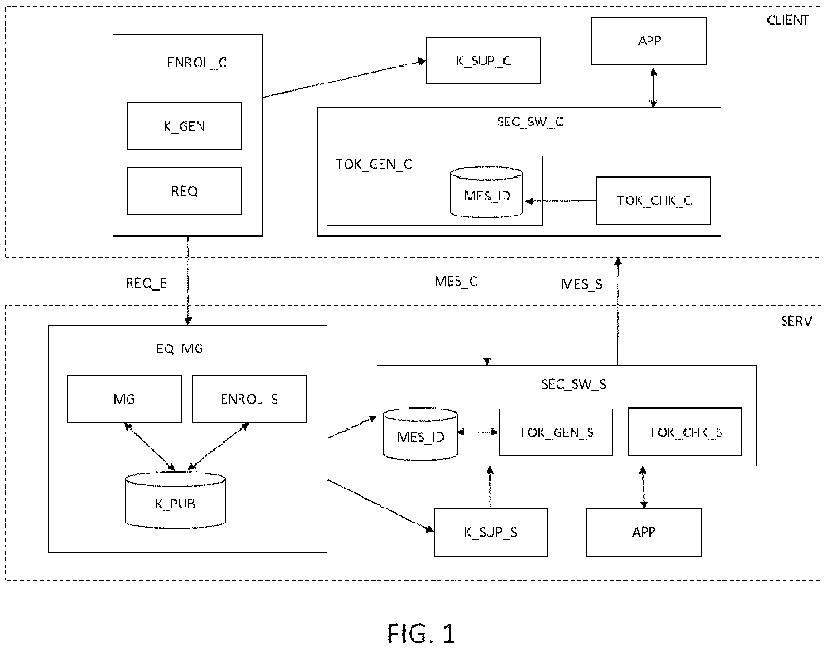

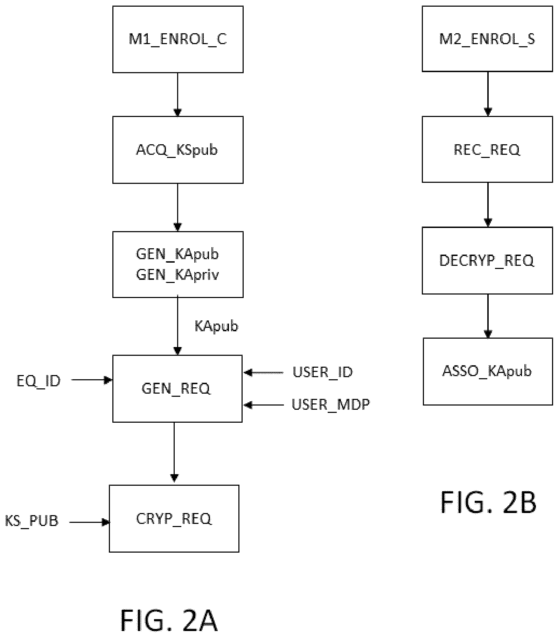

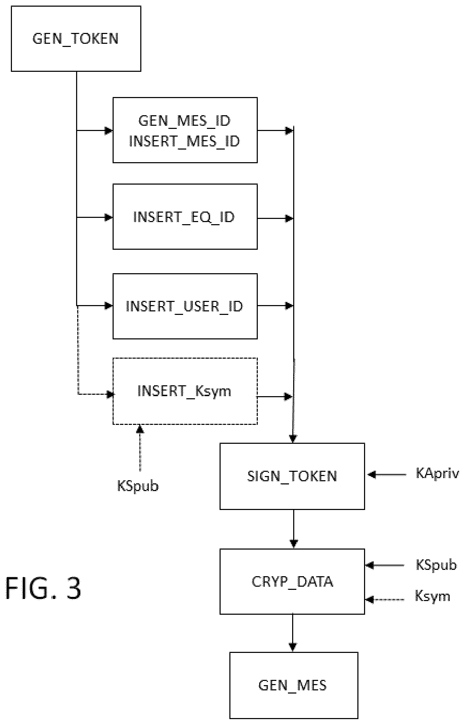

D'autres caractéristiques et avantages de l'invention ressortiront à la lecture de la description détaillée qui suit, en référence aux figures annexées, qui illustrent :
▪ figure 1 : un schéma de principe des principaux éléments du système de l'invention mettant en œuvre les procédés de l'invention ;
▪ figures 2A, 2B : les principales étapes des procédés de l'invention de génération d'une requête d'enrôlement et de réception de la requête d'enrôlement ;
▪ figure 3 : les principales étapes du procédé de communication de l'invention.

### DESCRIPTION

L'invention concerne la sécurisation et l'authentification de communications entre deux entités communicantes. La description détaille un mode de réalisation dans lequel les deux entités concernent respectivement un client et un serveur. La présente invention vise un procédé d'enrôlement entre au moins deux entités et un procédé de communication entre au moins ces deux entités.

### Client

Un client selon l'invention comprend à minima un calculateur, une mémoire et une interface de communication. Selon un mode de réalisation, le client est un ordinateur, une tablette, un smartphone ou encore un équipement industriel de type boitier intelligent ou tout équipement électronique dédié pour l'application visant à transférer des données de manière sécurisée. Le client comprend un système d'exploitation et un ensemble de fonctions permettant d'offrir à un utilisateur un ensemble de services au sein d'un réseau.

Le client est donc associé à un équipement. On parlera, dans la description qui suit, indifféremment d'un équipement ou d'un client, lorsque le client est une entité communicante ayant une configuration lui permettant de s'identifier au sein d'un réseau. Le client comprend donc un identifiant noté EQ_ID. L'équipement client est donc indifféremment noté EQ_{A}, EQ_{B} ou encore CLIENT d'une manière générale.

En conséquence, le client est généralement une entité qui est capable d'initier une communication par une procédure d'enrôlement qui a pour objectif de sécuriser un transfert de données entre ledit client et un serveur.

### Serveur

Un serveur selon l'invention comprend à minima une mémoire et un calculateur ainsi qu'une interface de communication. Selon un mode de réalisation, le serveur est un ordinateur connecté à un réseau, tel que le réseau internet. Selon un mode de réalisation, le serveur est configuré pour recevoir des messages provenant de différents clients et stocker des données envoyées par différents clients. Selon un mode de réalisation, le serveur stocke dans une base de données des données d'une pluralité d'utilisateurs dont des comptes clients et des associations entre chaque client et des équipements utilisateurs EQ. En outre, le serveur stocke des données cryptographiques.

Le serveur est un équipement mettant à disposition une clef publique KSpub pour un ou plusieurs client(s). Cette clef publique permet de chiffrer des messages émis par le client pour le serveur.

Le serveur de données de l'invention est un serveur offrant des services à un client. Le serveur de l'invention n'est donc pas un serveur d'authentification réalisant exclusivement les fonctions d'authentification au sens d'un tiers d'authentification couplé avec un autre serveur de données. Un des objectifs de l'invention est de permettre d'établir des communications sécurisées entre au moins un client et un serveur de données offrant des services impliquant une connexion sécurisée.

### Compte client

Dans la description qui suit un utilisateur est identifié par un Identifiant USER_ID. L'utilisateur est capable de définir un compte et de le référencer auprès du serveur, par exemple, au moyen d'une liaison distante permettant d'enregistrer les données de son compte. Le compte comprend au minimum un identifiant USER_ID et un mot de passe USER_MDP qui est associé à l'identifiant USER_ID.

Le procédé d'échange de données entre deux entités communicantes comprend donc préalablement une étape d'enregistrement d'un utilisateur sur l'entité définissant le serveur de données.

### Gestion de clefs asymétriques

La méthode d'authentification de l'invention est basée sur une génération d'un couple de clefs cryptographiques asymétriques et l'échange de clefs publiques entre les entités communicantes. Une clef publique Kpub et une clef privée Kpriv sont générées par un équipement, cette étape est notée K_GEN à la figure 1. Cette fonction peut être réalisée par un composant cryptographique logiciel ou matériel de l'équipement. Seules les clefs publiques sont échangées entre les entités communicantes :
▪ la clef privée de chaque client KApriv est stockée dans une mémoire d'un équipement client ou dans un composant de sécurité dédié comme par exemple un TPM désignant « Trusted Platform Module », et ;
▪ la clef privée d'un serveur de données KSpriv est stockée dans une mémoire du serveur.

Les clefs privées KApriv, KSpriv ne sont pas échangées entre les entités communicantes lors de l'exécution des procédés de l'invention.

Sur la figure 1, coté client, les clefs sont gérées par un composant cryptographiques notées K_SUP_C. Ce composant permet de stocker la clef privée KApriv et la clef publique KApub du client ainsi que la clef publique du serveur KSpub acquise lors d'une étape préalable.

La figure 1 représente, en outre, un composant cryptographique coté serveur K_SUP_S qui permet de stocker le couple de clefs asymétriques du serveur : KSpriv, KSpub.

Dans la présente invention, chaque équipement est associé à une clef privée unique d'un équipement KApriv qui peut éventuellement être renouvelée. Une clef privée d'un équipement KApriv est associée à un équipement EQ_{A} comme par exemple un smartphone, une tablette, un PC ou un équipement industriel de type boitier intelligent tel qu'un compteur électrique par exemple.

Un utilisateur est associé à un ou plusieurs équipements EQ_{A}, EQ_{B}, etc.

### Procédé de génération d'une requête d'enrôlement

L'enrôlement est une étape préliminaire à toute transmission de données utiles entre deux entités communicantes établissant une communication sécurisée selon le procédé de communication de l'invention. L'enrôlement permet d'échanger des données entre les entités communicantes qui vont permettre la sécurisation des échanges de données.

Lorsqu'un client procède à un enrôlement auprès d'un serveur, il initie cette procédure en générant une requête REQ_E. Un avantage est que cette requête ne comprend pas l'émission d'une clef privée de l'équipement. Le client comprend un composant noté ENROL_C permettant de mettre en œuvre le mécanisme d'enrôlement du point de vue du serveur, notamment pour générer les requêtes d'enrôlement REQ_E.

Du point de vue du serveur, un composant noté EQ_MG contrôle la gestion des équipements et des utilisateurs et traite les requêtes d'enrôlement REQ_E, notamment en vérifiant la validité des données de la requête. Lorsqu'un équipement est enrôlé par un serveur, son identifiant est stocké dans une mémoire du serveur. Le serveur est alors capable d'associer un client avec un ensemble d'équipements associés qui ont été enrôlés par l'utilisateur. Coté serveur, la fonction gérant les équipements et les utilisateurs est noté MG sur la figure 1 et la fonction traitant les requêtes d'enrôlement est notée ENROL_S. Une mémoire permet de stocker les clefs publiques des équipements ainsi que les mots de passe des comptes clients. Cette mémoire est notée K_PUB sur la figure 1.

Le procédé d'enrôlement de l'invention s'appuie sur la création d'un compte client par un utilisateur dont des données sont stockées dans une mémoire d'un serveur de données, le serveur de données SERV définissant l'une des entités communicantes de l'invention.

La figure 2A représente les principales étapes d'un procédé de génération d'une requête d'enrôlement REC_E engagé par le procédé de génération d'une requête d'enrôlement M1_ENROL_C réalisé par un équipement tel qu'un client.

Avant de communiquer avec un serveur selon le procédé de communication de l'invention, chaque client accomplit une phase d'enrôlement selon le procédé de génération d'une requête d'enrôlement de l'invention.

Le procédé M1_ENROL_C comprend une étape activant ce procédé qui correspond également à l'étape éponyme de la méthode M1_ENROL_C.

Le procédé de génération d'une requête d'enrôlement M1_ENROL_C par le client comprend une étape correspondant à l'acquisition d'une clef publique d'un serveur SERV, notée ACQ_KSpub. Selon les modes de réalisation de l'invention, l'étape d'acquisition de la clef publique du serveur KSpub peut être considérée comme faisant partie du procédé d'enrôlement ou elle peut être considérée comme une étape préalable dans laquelle la clef publique du serveur KSpub a été acquise par un utilisateur avant qu'il engage l'enrôlement. Dans ce dernier cas, l'acquisition de la clef publique du serveur KSpub n'est pas comprise dans le procédé d'enrôlement.

Cette étape peut être réalisée par une saisie manuelle si un utilisateur recopie une clef publique d'un serveur KSpub dans une interface d'un équipement client. En outre, la clef publique du serveur KSpub peut être reçue d'un équipement tiers ou encore directement du serveur SERV formant l'une des deux entités communicantes de l'invention. Dans ce dernier cas, la clef publique du serveur KSpub peut être reçue, par exemple, après la création d'un compte utilisateur auprès du serveur SERV. Selon d'autres exemples de réalisation, l'acquisition de la clef publique du serveur KSpub peut être générée au moyen d'un fichier tel qu'une image, un code captcha, un code barre ou un code 2D, tel qu'un QR code. L'acquisition de la clef publique du serveur KSpub par le client peut être réalisée, dans ce dernier cas, par une lecture du code ou de l'image comprenant ladite clef au moyen de l'équipement. L'équipement comprend dans ce dernier cas des moyens de capture d'une image tel qu'un capteur optique.

Selon un mode de réalisation, lorsque l'acquisition de la clef publique KSpub du serveur a déjà eu lieu, la clef publique du serveur est considérée comme déjà stockée dans une mémoire de l'équipement. L'étape d'acquisition de la clef publique du serveur KSpub du procédé peut donc correspondre à l'acquisition de cette clef depuis la mémoire de l'équipement quand elle a déjà été acquise du serveur. Lorsque l'équipement n'a pas la clef publique du serveur, l'acquisition comprend l'opération visant à récupérer cette clef publique KSpub du serveur. Cette opération peut résulter d'une opération visant à établir un dialogue entre le client et le serveur. Selon un autre mode de réalisation, l'utilisateur récupère la clef publique du serveur sans procéder à un échange entre le client et le serveur, par exemple par une recopie manuelle de la clef dans une interface du client.

Chaque équipement qui procède à un enrôlement avec un serveur a stocké une clef publique KSpub dudit serveur. La clef publique du serveur KSpub permet de chiffrer la requête d'enrôlement ainsi que les messages émis lors du procédé de communication de l'invention.

Selon un mode de réalisation de l'invention, le procédé de génération d'une requête d'enrôlement par le client comprend une étape de génération d'une clef publique d'un équipement EQ_{A}, notée KApub, et d'une clef privée d'un équipement notée KApriv. Les étapes de génération sont respectivement notées GEN_KApub et GEN_KApriv sur la figure 2A, elles sont en outre généralement générées en même temps. Dans ce dernier cas un couple de clefs est généré conjointement. Lorsque l'étape de génération du couple de clefs asymétrique a été préalablement effectué, le procédé de génération d'une requête d'enrôlement vise à extraire la clef publique de l'équipement KApub d'une mémoire de l'équipement pour l'inclure dans la requête. Dans ce dernier cas, selon un mode de réalisation, le procédé de génération d'une requête d'enrôlement comprend uniquement l'acquisition dans une mémoire de l'équipement de la clef publique du client et non sa génération à chaque enrôlement.

Le procédé de génération d'une requête d'enrôlement REQ_E par le client comprend donc la génération d'une requête d'enrôlement REQ_E à destination du serveur SERV. Cette étape est notée GEN_REQ sur la figure 2A. Cette étape est réalisée par un calculateur du client notée sur la figure 1 : « REQ ». Elle comprend la récupération d'un certain nombre de données stockées dans une mémoire du client et la génération de la requête REQ_E comprenant ces données récupérées. Les étapes de récupération de certaines données sont également réalisées lors du procédé de communication de l'invention. Notamment, l'identifiant de l'équipement et l'identifiant utilisateur sont utilisés à chaque transmission de nouveaux messages par application du procédé de communication de l'invention. Certaines étapes qui suivent sont donc communes au procédé d'enrôlement et au procédé de communication de l'invention.

Selon un mode de réalisation, le calculateur récupère des données d'au moins une mémoire du client, par exemple stockée dans une base de données dont un identifiant de l'équipement noté EQ_ID. En outre, le calculateur récupère l'identifiant utilisateur USER_ID. L'identifiant utilisateur USER_ID peut être :
- soit récupéré par le calculateur depuis une mémoire dans laquelle un utilisateur a préalablement stocké son identifiant ;
- soit récupéré depuis un contrôle de saisie d'une interface utilisateur dans laquelle l'utilisateur indique son identifiant sans qu'il soit préalablement stocké dans l'équipement.

Le calculateur récupère également un mot de passe utilisateur USER_MDP. Le mot de passe utilisateur USER_MDP peut être également soit récupéré d'une mémoire de l'équipement EQ_{A} dans laquelle il a été préalablement stocké par un utilisateur de l'équipement EQ_{A}, soit récupéré d'un contrôle de saisie d'une interface utilisateur. Cette étape est notamment exécutée pour le procédé d'enrôlement.

En outre, le calculateur récupère la clef publique de l'équipement KApub de l'équipement EQ_{A} qui est stockée dans une mémoire de l'équipement EQ_{A} après sa génération ou sa récupération depuis une interface. La clef publique du client est transmise lors du procédé d'enrôlement, mais ne l'est pas forcément lors du procédé de communication de l'invention. C'est justement un avantage de l'invention de ne pas réémettre la clef publique de l'équipement à chaque émission de nouveaux messages.

La requête d'enrôlement ainsi générée comprend donc les données suivantes :
- l'identifiant utilisateur, USER_ID ;
- le mot de passe du client, USER_MDP ;
- l'identifiant de l'équipement, EQ_ID ;
- la clef publique du client, KApub.

Le procédé de génération d'une requête d'enrôlement comprend une étape de chiffrement de la requête, noté CRYP_REQ sur la figure 2A, par la clef publique du serveur KSpub. Cette clef publique a été préalablement acquise par le client et peut être utilisée pour chiffrer la requête d'enrôlement. En conséquence, le serveur sera en mesure de déchiffrer la requête ainsi chiffrée grâce à sa clef privée KSpriv.

Selon une alternative de réalisation, la clef publique du serveur KSpub est utilisée pour chiffrer une clef symétrique. Cette solution est plus performante en termes de calculs qu'un algorithme de chiffrement du message effectué à partir de clefs asymétriques. Cette solution permet de chiffrer un message plus court avec une clef asymétrique qui comprend la clef symétrique. A la réception, la clef privée KSpriv du serveur permet de déchiffrer la clef symétrique et de décoder le message chiffré avec la clef symétrique ainsi déchiffrée. Cette alternative peut être mise en œuvre lors du procédé d'enrôlement et/ou lors du procédé de communication de l'invention.

Le procédé d'enrôlement est effectué préalablement à l'émission de messages selon le procédé de communication de l'invention.

L'enrôlement peut être effectuée une fois pour toute depuis l'équipement client ou depuis n'importe quelle équipement permettant d'établir une liaison avec le serveur de données.

Selon un autre exemple de réalisation, l'enrôlement peut être une étape préliminaire à l'émission d'un message qui succède directement l'étape de transmission sécurisée de messages.

### Réception de la requête par le serveur

L'invention concerne le traitement M2_ENROL_S d'une requête d'enrôlement REQ_E reçu par le serveur. Lorsque le serveur reçoit une nouvelle requête d'enrôlement REQ_E, il procède à sa réception REC_REQ au moyen d'une interface de communication, comme par exemple une carte réseau. Le serveur engage une étape de déchiffrement des données, notée DECRYPT_REQ, au moyen de sa clef privée KSpriv.

Les données déchiffrées sont ensuite extraites et stockées dans une mémoire du serveur. Le serveur effectue un contrôle de l'identifiant utilisateur USER_ID et du mot de passe de l'utilisateur MDP_USER qui sont des données déjà enregistrées dans une mémoire du serveur lors de la création du compte client sur le serveur SERV.

Lorsque les données du compte utilisateur reçues correspondent aux données déjà enregistrées, le serveur enregistre les données de l'équipement dont son identifiant EQ_ID et la clef publique de l'équipement KApub dans une mémoire.

Le serveur SERV procède alors à une association ASSO_KApub entre les données des équipements et un compte utilisateur. Ainsi, un utilisateur peut être associé à différents équipements dont les clefs publiques sont connues du serveur.

### Renouvellement de clef

Selon un mode de réalisation, un mécanisme de renouvellement de clefs engage le renouvellement d'un couple de clefs asymétriques : une clef privée de l'équipement KApriv et une clef publique de l'équipement KApriv sont renouvelées.

La clef publique de l'équipement KApub peut être à nouveau transmise à destination du serveur. Pour cela, un procédé d'enrôlement peut être réitéré, par exemple sur demande du serveur ou après un certain temps écoulé. Selon un exemple de mise en œuvre, le serveur peut émettre un message d'erreur suite à la réception d'un message du client dont la clef publique n'est plus valide. Le message d'erreur peut comprendre un code de rejet indiquant qu'un procédé d'enrôlement doit être reconduit avec une nouvelle clef publique.

Identiquement, lorsque c'est la clef publique du serveur qui est modifiée, un message d'erreur peut indiquer au client qu'il est nécessaire qu'il récupère une nouvelle clef publique du serveur.

Ce mécanisme peut être automatiquement engagé et de manière transparente vis-à-vis d'un utilisateur. L'équipement renouvelle alors une nouvelle clef privée KApub qui est stockée localement et renouvelle une nouvelle clef publique KApub associée à cette clef privée. La clef publique de l'équipement est alors envoyée par une nouvelle requête d'enrôlement au serveur.

### Transmission des données utiles

Le procédé de communication de l'invention permet d'émettre et de recevoir des données sous forme de messages entre deux entités communicantes, ces messages sont notés MES_C et MES_S sur la figure 1. Le procédé de l'invention permet d'échanger des communications de manière sécurisée par la définition de messages dont la sécurité est « autoportée », c'est-à-dire que chaque message échangé comprend ses propres informations de sécurité permettant de traiter et de chiffrer le message envoyé. L'invention ne nécessite pas qu'un établissement d'une session entre les deux entités communicantes assure un canal sécurisé entre lesdites deux entités. L'invention comprend donc deux mécanismes permettant de définir une méthode de communication sécurisée entre deux entités communicantes :
▪ un mécanisme d'enrôlement et ;
▪ un mécanisme de génération d'entête d'authentification des messages de données transmis entre les deux entités.
L'invention se rapporte à chacun de ces deux mécanismes.

La description qui suit décrit un mode de réalisation dans lequel le client émet un message vers le serveur, ce message étant vérifié par le serveur. L'invention se rapporte également aux échanges inverses de messages, dont notamment un message dont l'entête est généré par le serveur et dont la vérification est effectuée à réception par un client. Selon un mode de réalisation, le procédé de communications sécurisé de l'invention est symétrique entre un client et un serveur. Le procédé de communication s'applique donc réciproquement d'une transmission d'un client vers un serveur ou d'un serveur vers un client.

On note sur la figure 1, les composants permettant de traiter les fonctions en émission et en réception des procédés de l'invention : SEC_SW_C pour le client et SEC_SW_S coté serveur.

### Entête d'authentification d'un message

Consécutivement à l'étape d'enrôlement, l'invention met en œuvre un procédé de communication permettant de transmettre des messages sécurisés par la génération d'un entête d'authentification, noté TOKEN. Le procédé de communication pourrait, dans une autre variante de réalisation, être réalisé indépendamment de l'exécution préalable d'un procédé d'enrôlement. C'est par exemple le cas lorsque les données échangées dans le procédé d'enrôlement seraient définies par un utilisateur dans chaque équipement, comme par exemple l'échange des clefs publiques et des identifiants d'équipement et d'utilisateur.

L'entête d'authentification TOKEN est généré par un composant du client noté sur la figure 1 : TOK_GEN_C. Coté serveur, le composant noté TOK_CHK_S vérifie l'entête d'authentification reçu du client. Inversement, lorsqu'un message est émis par le serveur à destination d'un client, un composant noté TOK_GEN_S, coté serveur, permet de générer l'entête d'authentification du message et un composant noté TOK_CHK_C, coté client, permet de vérifier l'entête d'authentification d'un message émis par le serveur à destination du client.

L'entête d'authentification TOKEN des messages transmis comprend différents champs de données dont l'identifiant de l'équipement EQ_ID, l'identifiant de l'utilisateur USER_ID, l'identification du message, MES_ID, un profil de sécurité PRO_SEC et une signature le cas échéant.

L'entête d'authentification TOKEN peut être, par exemple, intégré aux entêtes du protocole transport utilisé selon les communications effectuées, comme un entête du protocole http par exemple.

Selon un mode de réalisation, l'entête d'authentification est ajouté à la liste des entêtes du protocole applicatif de transport utilisé par l'application. Dans l'exemple du protocole HTTP, selon un mode de réalisation, le contenu de l'entête d'authentification générée par la présente invention est associé à l'entête « Authorization : » du protocole HTTP/1.1 selon la RFC [2616].

### Identifiant de message, MES_ID

Selon un mode de réalisation, le calculateur récupère un identifiant de message MES_ID qui est généré par un compteur de messages qui génère des identifiants de messages. La figure 1 représente les composants permettant de générer et traiter des identifiants de messages, ils sont également notés MES_ID.

Selon un mode de réalisation, le compteur de message calcule le MES_ID à partir d'un aléa, c'est-à-dire d'un paramètre aléatoire et d'une date. L'aléa permet de définir un identifiant unique du message.

Lorsque l'identifiant du message MES_ID est calculé notamment à partir d'une date définie par une horloge locale de l'équipement, l'identifiant MES_ID comprend une information relative à la date de génération du message qui pourra être décodée en réception par le serveur.

Selon une alternative de réalisation, le MES_ID peut être généré avec un paramètre non aléatoire et une date.

L'identifiant de message MES_IS peut être par exemple calculé à la volée, c'est-à-dire en temps réel par un calculateur de l'entité communicante. L'identifiant du message ainsi calculé est attribué à un message.

### Profil de sécurité

Le profil de sécurité PRO_SEC permet de définir un algorithme qui sera utilisé pour signer ou chiffrer le contenu à transmettre et pour indiquer et définir si la réponse émise par le serveur doit également être chiffrée et selon quel algorithme.

Les différentes entités communicantes, telles qu'un serveur et une pluralité de clients peuvent comprendre une configuration de profils de sécurité prédéfinis. Chaque profil prédéfini peut être activé pour définir une manière d'émettre et recevoir des données avec une autre entité.

Selon un mode de réalisation de l'invention, quatre profils de sécurité sont prédéfinis.

Un premier profil correspond à l'activation d'un paramètre de sécurité P1 incorporé dans l'entête d'authentification TOKEN du message à transmettre par le client au serveur. Ce paramètre indique la présence d'un chiffrement des données utiles transmises. Ainsi, le serveur recevant ce paramètre est capable de mettre en œuvre un déchiffrement des données transmises lorsque ces dernières sont chiffrées.

Un second profil correspond à l'activation d'un paramètre de sécurité P2 incorporé dans l'entête d'authentification du message à transmettre par le client. Le paramètre P2 permet d'indiquer que l'entête d'authentification est signé. La signature est dans ce cas effectuée par le client grâce à la clef privée du client KApriv. Selon un mode de réalisation, la signature est incorporée dans l'entête d'authentification.

Un troisième profil correspond à l'activation d'un paramètre de sécurité P3 incorporé dans l'entête d'authentification TOKEN du message à transmettre par le client au serveur. Ce paramètre indique que les données utiles du ou des message(s) retour(s) émis par le serveur vers le client doivent être chiffrées.

Un quatrième profil correspond à l'activation d'un paramètre de sécurité P4 incorporé dans l'entête d'authentification TOKEN du message à transmettre par le client. Le paramètre P4 indique au serveur qu'il doit signer les entêtes d'authentification des messages qu'il émettra en retour du message émis par le client.

Ainsi, si les paramètres P3 et P4 sont activés par le client dans les messages émis vers le serveur, le serveur chiffrera les données utiles et signera l'entête d'authentification TOKEN des messages émis à son tour vers le client en réponse au(x) message(s) reçu(s) de ce dernier.

Le serveur peut donc indiquer à son tour la valeur des paramètres P1, P2, P3 et P4 pour informer le client de son mode de chiffrement des données ainsi que la présence d'une signature.

Cette configuration a l'avantage de permettre d'établir des communications dont la sécurité est entièrement autoportée entre deux entités communicantes.

Lorsque le procédé est implémenté symétriquement dans le client et le serveur, l'entête d'authentification de la réponse du serveur comprend donc également un profil de sécurité comprenant un paramétrage P1, P2, P3, P4. Dans ce cas, la signature est générée à partir de la clef privée du serveur KSpriv et le chiffrement des données utiles est effectuée avec la clef publique du client KApub.

Les différents profils de sécurité permettent d'adapter le niveau de sécurité des échanges de données entre les entités communicantes selon le contexte d'échanges de données ou du type de données à échanger.

Selon un mode particulier de réalisation de l'invention, les profils de sécurité PRO_SEC utilisent un cinquième paramètre de sécurité P5 représentatif du format de la signature utilisée pour l'entête d'authentification. Ce paramètre permet de définir l'utilisation ou non dans la signature de :
▪ un ou plusieurs champs de données de l'entête d'authentification TOKEN du message ;
▪ des données utiles et ;
▪ de données du protocole transport tels que les entêtes du protocole transport, ou d'autres champs de données tels que le champ du type REQUEST_LINE du protocole http.

Selon un autre mode de réalisation, les paramètres de sécurité P2 et P4 indiquent directement le format de signature appliqué.

Le format d'une signature est défini par au moins l'une quelconque de ces données ou une combinaison de ces données :
▪ L'algorithme de la fonction de hachage ;
▪ L'algorithme de chiffrement ;
▪ Le type de clef ;
▪ L'indication des données à signer telle que par exemple les champs de données de l'entête d'authentification ainsi que les données utiles et optionnellement des données relatives aux champs de données du protocole transport utilisé.

Lorsqu'une entité reçoit un profil de sécurité qu'elle ne connait pas, c'est-à-dire qui n'est pas prédéfini dans une mémoire de l'entité, alors un profil par défaut peut être utilisé. Selon un autre mode de réalisation, l'étape d'enrôlement peut comprendre la transmission de la définition d'un profil de sécurité soit dans l'entête d'authentification TOKEN de données, soit dans la charge utile des données transmises. A réception, une entité peut alors enregistrer la définition du nouveau profil de sécurité et l'utiliser pour déployer une stratégie de chiffrement des messages émis et de déchiffrement des messages reçus.

En outre, le profil de chiffrement comprend la désignation d'un algorithme de génération de signature comme par exemple RSA-SHA256 et le cas échéant la désignation d'un algorithme de chiffrement des données, comme par exemple AES.

Le profil de sécurité comprend donc une indication sur la présence d'une signature et sur la présence d'un chiffrement des données et le cas échéant, le profil de sécurité comprend la désignation des algorithmes utilisés pour générer la signature ou chiffrer les données.

### Signature

L'entête d'authentification TOKEN comprend également une signature des données transmises dans l'entête et/ou dans le corps de message. Une signature est créée au moyen d'un algorithme de génération d'une signature. La signature est réalisée au moyen d'une clef privée de l'entité communicante signant. Si le client signe l'entête d'authentification d'un message émis, la signature est réalisée à partir de la clef KApriv, c'est à dire la clef privée de l'équipement. Selon un exemple de réalisation un algorithme basé sur une méthode RSA SHA256 peut être mise en œuvre par l'invention pour générer la signature. Nous rappelons que l'acronyme SHA désigne dans la terminologie anglo-saxonne : « Secure Hash Algorithm » et correspond à une fonction de hachage cryptographique. Le RSA est un algorithme de cryptographie asymétrique utilisant un couple de clefs asymétriques. Les deux algorithmes peuvent être associés dans un unique algorithme de chiffrement.

Selon un autre exemple de réalisation, l'algorithme ECDSA désignant « Elliptic Curve Digital Signature Algorithm » peut être utilisé selon la méthode de l'invention. Il s'agit d'un algorithme de signature numérique à clef publique.

L'algorithme de génération d'une signature peut être automatiquement déterminé en fonction de l'équipement du client ou de son système d'exploitation. Un avantage est d'utiliser les ressources déjà existantes sur un équipement.

Selon un mode de réalisation, lorsqu'un champ de l'entête d'authentification TOKEN comprend la signature générée, un autre champ peut être renseigné dans l'entête pour désigner l'algorithme permettant de générer la signature et/ou l'algorithme de chiffrement des données utiles. A la réception, le serveur de données pourra décoder la signature grâce au choix du bon algorithme pour décoder la signature.

La signature est générée à partir de données relatives notamment au client et à l'équipement.

Selon un exemple de réalisation, la signature est générée à partir des données : MES_ID, EQ_ID, USER_ID, PRO_SEC et du contenu du message.

Selon un autre mode de réalisation, la signature est générée à partir des données utiles du message. Cela permet de générer une signature des données d'authentification MES_ID, EQ_ID, USER_ID, du profil de sécurité PRO_SEC, et du contenu du message DATA. Les données lorsqu'elles sont signées peuvent correspondre aux données utiles chiffrées ou aux données utiles non chiffrées.

Selon un mode de réalisation, la signature peut prendre en compte des données d'un message du protocole de transport qui achemine les messages échangés telles que des données d'entête de protocole, de l'adresse du message du protocole ou encore d'un autre champ propre au protocole comme par exemple la ligne de requête du protocole http.

Le terme « entête de protocole » est utilisé pour le différencier de l'entête d'authentification de l'invention.

A titre d'exemple, les différents champs du protocole http de l'exemple suivant peuvent être utilisés selon un mode de réalisation de l'invention pour signer l'entête d'authentification. La requête http ayant par exemple la forme suivante :
▪ Entête :
   POST http://control_center_url/rest/conso HTTP/1.0
   Accept : application/json
   User-Agent : Mozilla/4.0 (compatible; MSIE 5.0; Windows 95)
   Authorization:JohnDo:Android22434:1430896533037_97:OneWaySignature_ RSA-SHA256_none: w9Bgirb8......
▪ Corps de message (body) :
   {"PI"=2345,"HCHC"=29384632,"HCHP"=2936241490}

Selon un mode de réalisation, une ou plusieurs données relatives aux données du protocole transport peuvent être utilisées. Une partie d'un champ d'un entête du protocole peut également être utilisée. Selon un exemple, le champ Method du protocole http précisant le type de requête dont notamment les valeurs {GET, PUT, POST}, présent dans la ligne de requête d'une requête http a un intérêt pour a un intérêt pour signer l'entête d'authentification TOKEN. Cette prise en compte permet notamment d'éviter les attaques de type « rejeu » par un tiers en réalisant une autre action que la requête initiale.

Selon un exemple de réalisation, une entête de message d'un protocole applicatif de transport est définie par un couple {clé :valeur}. Par exemple pour le protocole HTTP, l'entête [Expires: "Sat, 07 Nov 2015 00:59:59 GMT"] représente une date d'expiration de la requête. Selon ce même protocole, le type de requête et l'adresse de la ressource à interroger sont contenus dans la ligne d requête du message, par exemple [POST http://control_center_uri/rest/conso HTTP/1.1], et peuvent être utilisés pour générer la signature.

Ce mode de réalisation est particulièrement avantageux pour assurer l'intégrité des échanges de données.

Selon ce même exemple, lorsque les données sont signées avec le couple [Expires: "Sat, 07 Nov 2015 00:59:59 GMT"], et avec le type de la requête HTTP, qui est dans ce cas une requête de type « POST », il n'est pas possible qu'une attaque par rejeu en réutilisant les mêmes données avec un type de requête différent ou/et avec une date d'expiration différente soit engagée par un tiers puisque dans ce cas la signature ne sera pas reconnue par le serveur.

La génération d'une signature comprend l'exécution d'une fonction de hachage des données à signer. Ainsi, si un tiers, non autorisé, récupère un message signé, il n'est pas possible de reconstituer les données qui ont été signées à partir de la signature. La prise en compte de l'identifiant de message MES_ID, qui change à chaque message, dans la signature permet grâce à la fonction de hachage de générer un contenu de la signature totalement différent d'un message à l'autre.

La génération d'une signature peut comprendre également une fonction de padding, c'est-à-dire une fonction de remplissage des données.

La signature est enfin générée à partir de la clef privée du client KApriv.

Les entités communicantes de l'invention comprennent des moyens pour générer un couple de clefs asymétriques KApriv, KApub, la clef privée KApriv permettant de générer une signature d'une entête d'authentification d'un message émis par une entité communicante par l'exécution d'une fonction de hachage et d'une fonction de fonction de remplissage des données.

### Chiffrement des données

Lorsque l'option du chiffrement des données d'un message émis par le client est activée, le profil de chiffrement défini quel algorithme est utilisé pour chiffrer les données. Le profil de chiffrement est indiqué dans l'entête d'authentification TOKEN du message et permet d'indiquer la désignation de l'algorithme de chiffrement. Cette désignation peut être codée dans le même champ que la désignation de l'algorithme de la génération d'une signature. Les données du message qui sont transmises au serveur, sont chiffrées avec l'algorithme déterminé par le client. Les données peuvent ensuite être déchiffrées, coté serveur, grâce à l'indication de l'algorithme utilisé.

L'algorithme de chiffrement des données peut être automatiquement déterminé en fonction de l'équipement du client ou de son système d'exploitation. Un avantage est d'utiliser les ressources déjà existantes sur un équipement.

Un exemple d'algorithme selon l'invention peut être AES désignant « Advanced Encryption Standard » dans la terminologie anglo-saxonne. Il s'agit d'un standard de chiffrement avancé également connu sous le nom de Rijndael. D'autres algorithmes tels que Script ou Vscript peuvent être alternativement utilisés selon le procédé de l'invention.

Selon un mode de réalisation, les données utiles sont chiffrées à partir la clef publique du serveur KSpub, c'est-à-dire avec la clef publique d'une seconde entité communicante KSpub dans le cas général où le serveur est une seconde entité communicante.

Selon un autre mode de réalisation, les données sont chiffrées grâce à une clef symétrique et la clef symétrique est elle-même chiffrée par une clef asymétrique, telle que la clef publique du serveur KSpub. Ce mode de réalisation présente l'avantage d'optimiser les opérations de chiffrement sur des volumes de données plus petits, notamment relatifs à la taille d'une clef symétrique au lieu d'une taille de champ relative à un contenu de données.

Les profils de sécurité peuvent alors se transposer à ce cas de figure dans lequel il est précisé si un message comporte un entête signé et un contenu chiffré dans un sens et dans le sens retour. Un « contenu chiffré » signifie alors dans ce cas qu'il l'a été avec une clef symétrique et que la clef symétrique a été chiffrée avec une clef asymétrique.

### Avantages de la transmission de champs dans l'entête

Le champ MES_ID permet de définir une sécurité contre les attaques par rejeu de messages tiers.

Le champ EQ_ID permet de définir une sécurité lorsqu'un équipement a été suspendu ou révoqué par le serveur SERV.

Le champ USER_ID permet de définir une sécurité lorsqu'un compte utilisateur a été suspendu ou révoqué par le serveur SERV.

Selon un mode de réalisation de l'invention, lorsqu'une procédure de suspension ou de révocation d'un utilisateur a été engagée par le serveur, l'ensemble des équipements associé à cet utilisateur est également suspendu ou révoqué.

La figure 3 représente les principales étapes du procédé de communication de l'invention du point de vue d'une entité communicante qui génère un message MES.

L'étape de génération du TOKEN est notée GEN_TOKEN. Elle comprend les sous-étapes de génération d'un identifiant de message GEN_MES_ID et d'insertion INSERT_MES_ID de cet identifiant dans l'entête d'authentification TOKEN.

La génération du TOKEN comprend, en outre, l'insertion d'un identifiant d'équipement INSERT_ED_ID et l'insertion d'un identifiant d'utilisateur INSERT_USER_ID.

Ces étapes permettent de générer un entête d'authentification selon le procédé de communication de l'invention.

Lorsque le TOKEN est signé SIGN_TOKEN, il peut l'être à partir de la clef privée du client KApriv.

Lorsqu'un chiffrement est effectué CRYP_DATA, il peut l'être à partir de la clef publique KSpub du serveur.

Le message comportant l'entête d'authentification et les données utiles peut alors être généré GEN_MES selon le protocole utilisé pour émettre des données entre le client et le serveur, comme par exemple un protocole HTTP.

Selon une variante de réalisation, comme cela est représenté en pointillé sur la figure 3, une clef symétrique Ksym peut être utilisée pour chiffrer les données utiles lors de l'exécution de l'étape CRYP_DATA. Dans ce mode de réalisation, la clef symétrique peut être elle-même chiffrée à partir de la clef publique du serveur KSpub et être insérée par exemple dans l'entête d'authentification TOKEN lors de l'étape INSERT_Ksym.

### Serveur, Gestion des enrôlements

Le serveur de données qui correspond à une des entités communicantes de l'invention est destiné à gérer des transmissions de données avec une pluralité de clients. Il comprend à cet effet un composant permettant de gérer les équipements, il est noté EQ_MG sur la figure 1. Ce composant permet de stocker les données de chiffrement des équipements clients dans une mémoire notée K_PUB qui stocke les clefs publiques des équipements KApub. Ce composant comprend une fonction MG qui est configurée pour stocker les comptes clients et une fonction ENROL_S qui permet de recevoir et de traiter une requête d'enrôlement d'un équipement. Le traitement d'une requête comprend des opérations de déchiffrement des données et des opérations de vérifications visant à vérifier que l'équipement, l'utilisateur ou le message reçus ne sont pas suspendus ou révoqués ou que les comptes clients existent déjà bien.

La fonction MG permet, en outre, de révoquer ou de suspendre des équipements ou des utilisateurs. Cette action peut être automatiquement engagée à la demande d'un client ou à la demande d'un administrateur du serveur.

### Serveur - réception d'un message, déchiffrement

Le message émis par l'équipement est reçu par le serveur via une interface de communication. Un composant du serveur réalise une étape de vérification du message reçu.

Le serveur comprend un jeu de clefs asymétrique comprenant une clef publique KSpub et une clef privée KSpriv. Le message reçu par le serveur a été chiffré avec la clef publique du serveur KSpub par le client. Cette clef publique du serveur KSpub a été préalablement acquise par un utilisateur, par exemple, au moyen de l'équipement EQ_{A}.

### Serveur - vérification de l'identifiant de message

La vérification du message comprend le contrôle de l'identifiant du message : MES_ID. Le contrôle des données MES_ID comprend la vérification de la date de génération du message avec une heure locale du serveur. La date de génération du message peut être calculée à partir de l'identifiant de message MES_ID par un calculateur et un algorithme de décodage approprié. Lorsqu'un écart entre la date décodée dans le MES_ID et la date locale du serveur dépasse un seuil prédéfini, le serveur peut engager un refus du message reçu. Lorsque l'écart de date est inférieur à un seuil de date prédéfini, le serveur peut traiter le message en réception.

Selon un mode de réalisation, dans le cas d'un écart de date trop important, le serveur renvoie une erreur spécifique contenant la date courante du serveur. Cette variante permet que le client puisse se resynchroniser et réémettre un nouveau TOKEN valide.

La vérification du MES_ID par le serveur permet de limiter les attaques réseau par rejeu de message sur une période plus longue que la période de temps pendant laquelle un message est validé suite à l'analyse de la valeur des données du MES_D.

Une seconde vérification effectuée par le serveur consiste à vérifier si le message a déjà été reçu par ce dernier. Si le message a déjà été reçu, c'est-à-dire que le MES_ID du message reçu est identique à un MES_ID d'un message précédemment reçu alors le message n'est pas traité par le serveur.

### Serveur - vérification de l'authentification, de la clef publique client KApub

Lorsque le MES_ID d'un message reçu par le serveur n'est pas rejeté, alors le serveur procède à une étape de vérification de l'authentification du message. Selon les modes de réalisation, le serveur peut vérifier alternativement les données d'authentification avant l'identifiant MES_ID.

On rappelle que l'utilisateur a préalablement défini un compte utilisateur comprenant un identifiant utilisateur et un mot de passe associé. Le serveur SERV a stocké les données de ce compte utilisateur dans une mémoire.

Le serveur exécute une recherche de la clef publique de l'équipement KApub dans sa base de données. La clef publique de l'équipement KApub a été associée au client dont la référence USER_ID est connue puisqu'elle a été stockée suite à l'enregistrement du compte client.

La clef publique de l'équipement KApub qui est contenu dans message transmis est alors comparée à la clef publique de l'équipement stocké dans la mémoire du serveur.

Lorsqu'il y a correspondance des clefs publiques de l'équipement entre d'une part celle transmise dans le message et d'autre part celle stockée dans le serveur, une validation peut être effectuée du message reçu. Selon un mode de réalisation, la clef publique de l'équipement stockée dans le serveur peut être utilisée pour vérifier que la signature est correctement authentifiée, alors le message peut être traité par le serveur.

Si la clef publique du client KApub a été révoquée ou suspendue ou encore si elle n'est pas connue par le serveur, alors le message n'est pas traité par le serveur. Selon un mode de réalisation, lorsque la signature est invalide, le message est rejeté par le serveur.

Un avantage de cette solution est que le serveur ne stocke que des informations publiques des clients, c'est-à-dire les clefs publiques des clients KApub. Les clefs privées des clients ne sont pas stockées par le serveur. En conséquence, un tiers accédant à la base de données du serveur ne peut récupérer les clefs privées des clients sans l'autorisation des clients.

### Vérification de la signature

Lorsque les messages transmis sont signés, la clef publique de l'équipement KApub connue par le serveur SERV peut également être utilisée pour vérifier la signature comprise dans le message qui a été réalisée à partir de la clef privée du client KApriv. La signature peut être vérifiée puisque le serveur a reçu les données d'authentification : USER_ID, EQ_ID, l'identifiant de message MES_ID, le profil de sécurité PRO_SEC qui comprend le format de la signature le cas échéant, et le contenu du message DATA. Ces données peuvent être utilisées pour vérifier que le message a correctement été signé.

### Déchiffrement du message après vérifications

Lorsque l'identifiant de message MES_ID et que l'authentification du message ont été vérifiés par le serveur SERV, ce dernier traite le champ indiquant le profil de sécurité qui a été choisi par le client. Lorsque ce profil indique que le compte du message est chiffré, alors le serveur engage le déchiffrement des données utiles du message grâce à la clef publique de l'équipement KApub. Les données sont déchiffrées et stockées dans une mémoire ou émises vers une application traitant les données.

### Traitement du message après vérifications

Les données utiles, une fois décodées par le serveur, sont transmises à un composant APP traitant fonctionnellement le message reçu. Ce composant permet d'interpréter et de gérer le message au niveau d'une couche applicative. Réciproquement, coté client, le composant APP permet de traiter le contenu des messages provenant du serveur lorsque ces derniers ont été validés et déchiffrés par le composant SEC_SW_C.

### Avantages

La méthode de l'invention permet d'établir une communication de manière sécurisée sous forme de questions/réponses entre un client et un serveur sans avoir à gérer les états d'une communication, c'est-à-dire des sessions entre les entités communicantes. Ainsi, l'invention permet de s'affranchir d'un protocole préliminaire entre deux entités d'un réseau ou d'une liaison visant à préparer les conditions d'une communication sécurisée. Les moyens d'une communication sécurisée échangeant des données sous forme de questions / réponses peuvent être implémentés en respectant les principes d'une architecture de type REST.

L'invention permet donc de s'affranchir d'échanges de données telles que des certificats ou des PKI tout en permettant une sécurisation des échanges. L'invention s'affranchit donc d'une mise en œuvre d'une infrastructure PKI impliquant la gestion de certificat d'authentification. Un autre avantage de l'invention est d'induire qu'un faible coût de déploiement étant donné que la communication sécurisée peut être établie entre deux entités se découvrant pour la première fois.

La solution de l'invention permet de suspendre ou de révoquer un équipement par le serveur. Identiquement, le serveur peut révoquer ou suspendre un compte utilisateur.

Un autre avantage de l'invention est que le piratage de la base de données du serveur ne permettra pas à un tiers d'obtenir des clefs privées des équipements puisqu'il ne stocke que des informations publiques.

Un autre avantage de l'invention est de permettre de durcir l'association entre un équipement et un utilisateur. En effet, le procédé de l'invention permet d'associer dans les échanges, entre les entités communicantes, l'identifiant utilisateur USER_ID et l'identifiant d'un équipement EQ_ID. L'équipement possède un identifiant et un jeu de clefs asymétriques et l'utilisateur possède un compte utilisateur comprenant au moins un mot de passe et un identifiant, en conséquence le piratage d'un couple de données ne permet pas d'accéder au serveur sans l'autre couple de données.

## Revendications

1. Procédé de communication entre deux entités communicantes, une première entité communicante générant un message de données comprenant des données utiles et un entête d'authentification (TOKEN), ledit procédé comportant :
▪ une génération d'un identifiant de message (MES_ID) à partir d'un paramètre donné et d'une date et une insertion de l'identifiant dans un entête d'authentification (TOKEN) ;
▪ une insertion d'une pluralité de données d'authentification comprenant au moins un identifiant utilisateur (USER_ID) et un identifiant d'équipement (EQ_ID) dans l'entête d'authentification (TOKEN) ;
▪ une détermination et une insertion d'un profil de sécurité (PRO_SEC) dans l'entête d'authentification (TOKEN) définissant les conditions :
∘ de chiffrement des données utiles du message émis par la première entité communicante ;
∘ de génération d'une signature de données du message et du format de ladite signature générée ;
▪ une insertion des données utiles dans le message à transmettre, la seconde entité communicante (SERV) à réception d'un message de la première entité communicante (CLIENT) décodant l'entête d'authentification (TOKEN) de manière à :
▪ contrôler l'identifiant de message (MES_ID) pour déterminer si le message a été émis dans un laps de temps prédéfini ;
▪ contrôler l'identifiant de l'utilisateur (USER_ID) et l'identifiant de l'équipement (EQ_ID) en comparant la valeur de ces paramètres avec des données stockées dans une mémoire de la seconde entité communicante (SERV) pour déterminer si l'équipement ou l'utilisateur a été suspendu ou révoqué ;
▪ contrôler le paramètre de chiffrement (P1, P3) du profil de sécurité (PRO_SEC) du message reçu pour déchiffrer le cas échéant les données utiles avec la clef privée de la seconde entité communicante (SERV) ;
▪ contrôler, le cas échéant, le paramètre de signature (P2, P4) du profil de sécurité (PRO_SEC) du message reçu pour vérifier le cas échéant la signature au moyen de la clef publique (KApub) de la première entité communicante (CLIENT).

2. Procédé de communication selon la revendication 1, l'ensemble de données à signer comprend une combinaison des données suivantes :
▪ L'identifiant de message (MES_ID) ;
▪ L'identifiant utilisateur (USER_EQ) ;
▪ Un mot de passe d'un compte utilisateur (MDP_ID) ;
▪ L'identifiant de l'équipement (EQ_ID) ;
▪ Le profil de sécurité (PRO_SEC) ;
▪ Une information d'entêtes ou d'un champ de données de message représentative du protocole de transfert des données utiles ;
▪ Les données utiles (DATA).

3. Procédé de communication selon la revendication 1, la première entité communicante (CLIENT) comprenant une mémoire pour stocker une clef publique (KSpub) d'une seconde entité communicante (SERVEUR), **caractérisé en ce que** le profil de sécurité (PRO_SEC) comprend :
▪ un premier paramètre (P1) indiquant la présence ou non d'un chiffrement des données utiles (DATA) effectué à partir de la clef publique (KSpub) de la seconde entité communicante (SERVEUR) et ;
▪ un second paramètre (P2) indiquant la présence ou non d'une signature d'un ensemble de données à signer.

4. Procédé de communication selon la revendication 1, la première entité communicante (CLIENT) comprenant une mémoire pour stocker une clef publique (KSpub) d'une seconde entité communicante (SERVEUR), **caractérisé en ce que** le profil de sécurité (PRO_SEC) comprend :
▪ un premier paramètre (P1) indiquant la présence ou non d'un chiffrement des données utiles (DATA) effectué à partir d'une clef symétrique et le cas échéant de la présence d'un chiffrement de la clef symétrique à partir de la clef publique (KSpub) de la seconde entité communicante (SERVEUR) et ;
▪ un second paramètre (P2) indiquant la présence ou non d'une signature d'un ensemble de données à signer.

5. Procédé de communication selon l'une quelconque des revendications 3 à 4, **caractérisé en ce que** le profil de sécurité (PRO_SEC) comprend :
▪ Un troisième paramètre (P3) indiquant la présence ou non d'un chiffrement effectué à partir de la clef publique (KApub) de la première entité communicante (CLIENT) soit des données utiles soit d'une clef symétrique et ;
▪ Un quatrième paramètre (P4) indiquant la présence ou non d'une signature d'un ensemble de données à signer,
d'au moins un message devant être émis par une seconde entité communicante (SERVEUR) en réponse à un message reçu de la première entité communicante (CLIENT).

6. Procédé de communication selon la revendication 5, **caractérisé en ce que** le serveur comprend des moyens d'accès à la mémoire stockant les données correspondantes aux identifiants clients (USER_ID) et aux identifiants d'équipements (EQ_ID) de manière à révoquer ou suspendre un ou plusieurs équipement(s) ou client(s).

7. Procédé de communication selon l'une des revendications 1 à 6, **caractérisé en ce qu'**elle comprend préalablement l'exécution d'un procédé de génération d'une requête d'enrôlement (REQ_E), ladite requête d'enrôlement étant générée par une première entité communicante (CLIENT) à destination d'une seconde entité communicante (SERV) et **caractérisée en ce qu'**il comprend :
▪ Une activation de la procédure d'enrôlement (M1_ENROL_C);
▪ Une génération d'une requête d'enrôlement (REQ_E) comportant un identifiant d'un équipement (EQ_ID), un identifiant de l'utilisateur (USER_ID), un mot de passe de l'utilisateur (USER_MDP) et une clef publique (KApub) de la première entité communicante (CLIENT) ;
▪ Un chiffrement de la requête avec une clef publique (KSpub) de la seconde entité communicante (SERV) et une émission de la requête d'enrôlement (REQ_E) au moyen d'une interface de communication à destination de la seconde entité communicante (SERV).

8. Procédé selon la revendication 7, **caractérisé en ce qu'**il comprend préalablement :
▪ Une création d'un compte utilisateur comprenant un identifiant (USER_ID) et un mot de passe (USER_MDP) ;
▪ L'enregistrement des données dudit compte utilisateur dans une mémoire de la seconde entité communicante (SERV) ;
▪ Une acquisition (ACQ_KSpub) d'une clef publique (KSpub) de la seconde entité communicante (SERV) pour lequel la procédure d'enrôlement est engagée depuis la première entité communicante (CLIENT) ;
▪ Une génération d'un couple de clefs asymétriques (KApub, KApriv) de la première entité communicante (CLIENT).

9. Procédé, **caractérisé en ce que** la seconde entité communicante (SERV) comprend :
▪ Une réception d'une requête d'enrôle générée par un procédé de génération d'une requête d'enrôlement (REQ_E) selon l'une des revendications 7 à 8 ;
▪ Un déchiffrement des données de la requête d'enrôlement (REQ_E) au moyen d'une clef privée (KSpriv) de la seconde entité communicante (SERV) ;
▪ Une comparaison entre l'identifiant utilisateur (USER_ID) reçu et le mot de passe utilisateur (USER_MDP) reçu avec des données de comptes clients stockés dans une mémoire de la seconde entité communicante (SERV) ;
▪ Un enregistrement de l'identifiant de l'équipement (EQ_ID) dans une mémoire de la seconde entité communicante (SERV) ;
▪ Un enregistrement de la clef publique (KApub) de la première entité communicante (CLIENT) associée à l'identifiant de l'équipement (EQ_ID) dans une mémoire de la seconde entité communicante (SERV).

10. Procédé selon la revendication 9, **caractérisé en ce que** la seconde entité communicante (SERV) comprend :
▪ un contrôle d'une date actuelle avec une date référence ;
▪ une génération d'un message à destination de la première entité communicante (CLIENT) comprenant un code spécifique indiquant qu'un couple de clefs asymétriques doit être renouvelé ;
▪ une réception d'une nouvelle requête d'enrôlement générée par la première entité communicante selon le procédé de l'une des revendications 7 à 8.

11. Entité communicante **caractérisée en ce qu'**elle comprend au moins une mémoire, un calculateur et une interface de communication pour l'exécution des étapes du procédé de communication selon l'une quelconque des revendications 1 à 10 réalisées par une même entité..

12. Programme d'ordinateur comportant un ensemble d'instructions pour la mise en œuvre du procédé de communication de l'une quelconque des revendications 1 à 10.

## Patentansprüche

1. Kommunikationsverfahren zwischen zwei kommunizierenden Einheiten, wobei eine erste kommunizierende Einheit eine Datennachricht erzeugt, die zweckdienliche Daten und einen Authentifizierungskopf (TOKEN) umfasst, wobei das genannte Verfahren umfasst:
▪ ein Erzeugen einer Nachrichtenkennung (MES_ID) ausgehend von einem bestimmten Parameter und einem Datum und einem Einfügen der Kennung in einem Authentifizierungskopf (TOKEN);
▪ ein Einfügen einer Vielzahl von Authentifizierungsdaten, die wenigstens eine Nutzerkennung (USER_ID) und eine Ausrüstungskennung (EQ_ID) in dem Authentifizierungskopf (TOKEN) umfassen;
▪ eine Bestimmung und ein Einfügen eines Sicherheitsprofils (PRO_SEC) in dem Authentifizierungskopf (TOKEN), die die Bedingungen definieren:
∘ der Verschlüsselung der zweckdienlichen Daten der Nachricht, die von der ersten kommunizierenden Einheit ausgegeben wird;
∘ der Erzeugung einer Datensignatur der Nachricht und des Formats der genannten erzeugten Signatur;
▪ ein Einfügen der zweckdienlichen Daten in die zu übertragende Nachricht,
wobei die zweite kommunizierende Einheit (SERV) beim Empfang einer Nachricht von der ersten kommunizierenden Einheit (CLIENT) den Authentifizierungskopf (TOKEN) derart dekodiert, dass:
▪ die Nachrichtenkennung (MES_ID) kontrolliert wird, um zu bestimmen, ob die Nachricht in einer vordefinierten Zeitspanne ausgegeben wurde;
▪ die Kennung des Nutzers (USER_ID) und die Kennung der Ausrüstung (EQ_ID) durch Vergleichen des Wertes dieser Parameter mit den Daten kontrolliert werden, die in einem Speicher der zweiten kommunizierenden Einheit (SERV) gespeichert sind, um zu bestimmen, ob die Ausrüstung oder der Nutzer unterbrochen oder widerrufen wurde;
▪ der Verschlüsselungsparameter (P1, P3) des Sicherheitsprofils (PRO_SEC) der empfangenen Nachricht kontrolliert wird, um ggf. die zweckdienlichen Daten mit dem privaten Schlüssel der zweiten kommunizierenden Einheit (SERV) zu entschlüsseln;
▪ ggf. das Kontrollieren des Signaturparameters (P2, P4) des Sicherheitsprofils (PRO_SEC) der empfangenen Nachricht, um ggf. die Unterschrift mittels des öffentlichen Schlüssels (KApub) der ersten kommunizierenden Einheit (CLIENT) zu überprüfen.

2. Kommunikationsverfahren gemäß Anspruch 1, wobei die Gruppe von zu signierenden Daten eine Kombination der folgenden Daten umfasst:
▪ Die Nachrichtenkennung (MES_ID);
▪ Die Nutzerkennung (USER_EQ);
▪ Ein Passwort eines Nutzerkontos (MDP_ID);
▪ Die Kennung der Ausrüstung (EQ_ID);
▪ Das Sicherheitsprofil (PRO_SEC);
▪ Eine Information von Köpfen oder einem Feld von Nachrichtendaten, die das Übertragungsprotokoll der zweckdienlichen Daten darstellt;
▪ Die zweckdienlichen Daten (DATA).

3. Kommunikationsverfahren gemäß Anspruch 1, wobei die erste kommunizierende Einheit (CLIENT) einen Speicher zum Speichern eines öffentlichen Schlüssels (KSpub) einer zweiten kommunizierenden Einheit (SERVEUR) umfasst, **dadurch gekennzeichnet, dass** das Sicherheitsprofil (PRO_SEC) umfasst:
▪ einen ersten Parameter (P1), der das Vorhandensein oder NichtVorhandensein einer Verschlüsselung der zweckdienlichen Daten (DATA) anzeigt, die ausgehend von dem öffentlichen Schlüssel (KSpub) der zweiten kommunizierenden Einheit (SERVEUR) durchgeführt wird, und;
▪ einen zweiten Parameter (P2), der das Vorhandensein oder NichtVorhandensein einer Signatur einer Gruppe von zu signierenden Daten angibt.

4. Kommunikationsverfahren gemäß Anspruch 1, wobei die erste kommunizierende Einheit (CLIENT) einen Speicher zum Speichern eines öffentlichen Schlüssels (KSpub) einer zweiten kommunizierenden Einheit (SERVEUR) umfasst, **dadurch gekennzeichnet, dass** das Sicherheitsprofil (PRO_SEC) umfasst:
▪ einen ersten Parameter (P1), der das Vorhandensein oder NichtVorhandensein einer Verschlüsselung der zweckdienlichen Daten (DATA), die ausgehend von einem symmetrischen Schlüssel durchgeführt wird, und ggf. das Vorhandensein einer Verschlüsselung des symmetrischen Schlüssels ausgehend von dem öffentlichen Schlüssel (KSpub) der zweiten kommunizierenden Einheit (SERVEUR) angibt, und;
▪ einen zweiten Parameter (P2), der das Vorhandensein oder NichtVorhandensein einer Signatur einer Gruppe von zu signierenden Daten angibt.

5. Kommunikationsverfahren gemäß irgendeinem der Ansprüche 3 oder 4, **dadurch gekennzeichnet, dass** das Sicherheitsprofil (PRO_SEQ) umfasst:
▪ einen dritten Parameter (P3), der das Vorhandensein oder NichtVorhandensein einer Verschlüsselung angibt, die ausgehend von dem öffentlichen Schlüssel (KApub) der ersten kommunizierenden Einheit (CLIENT) entweder der zweckdienlichen Daten oder eines symmetrischen Schlüssels angibt; und
▪ einen vierten Parameter (P4), der das Vorhandensein oder NichtVorhandensein einer Signatur einer Gruppe von zu signierenden Daten angibt:
wenigstens eine Nachricht, die von einer zweiten kommunizierenden Einheit (SERVEUR) in Beantwortung einer Nachricht ausgegeben werden soll, die von der ersten kommunizierenden Einheit (CLIENT) empfangen wird.

6. Kommunikationsverfahren gemäß Anspruch 5, **dadurch gekennzeichnet, dass** der Server Zugangsmittel zu dem Speicher umfasst, die die Daten speichern, die den Client-Kennungen (USER_ID) und den Ausrüstungskennungen (EQ_ID) entsprechen, derart, dass ein(e) oder mehrere Ausrüstung(en) oder Client(s) widerrufen wird / werden.

7. Kommunikationsverfahren gemäß einem der Ansprüche 1 bis 6, **dadurch gekennzeichnet, dass** es zuvor die Ausführung eines Erzeugungsverfahrens einer Einlernanforderung (REQ_E) umfasst, wobei die genannte Einlernanforderung durch eine erste kommunizierende Einheit (CLIENT) erzeugt ist, die für eine zweite kommunizierende Einheit (SER) bestimmt ist, und **dadurch gekennzeichnet, dass** sie umfasst:
▪ Eine Aktivierung des Einlernverfahrens (M1_ENROL_C);
▪ Ein Erzeugen einer Einlernanforderung (REQ_E), die eine Kennung einer Ausrüstung (EQ_ID), eine Kennung des Nutzers (USER_ID), ein Passwort des Nutzers (USER_MDP) und einen öffentlichen Schlüssel (KApub) der ersten kommunizierenden Einheit (CLIENT) umfasst;
▪ Eine Verschlüsselung der Anforderung mit einem öffentlichen Schlüssel (KSpub) der zweiten kommunizierenden Einheit (SERV) und eine Ausgabe der Einlernanforderung (REQ_E) mittels einer Kommunikationsschnittstelle, die für die zweite kommunizierende Einheit (SERV) bestimmt ist.

8. Verfahren gemäß Anspruch 7, **dadurch gekennzeichnet, dass** es zuvor umfasst:
▪ Ein Anlegen eines Nutzerkontos, das eine Kennung (USER_ID) und ein Passwort (USER_MDP) umfasst;
▪ Das Speichern der Daten des genannten Nutzerkontos in einem Speicher der zweiten kommunizierenden Einheit (SERV);
▪ Einen Erwerb (ACQ_KSpub) eines öffentlichen Schlüssels (KSpub) der zweiten kommunizierenden Einheit (SERV), für den das Einlernverfahren ausgehend von der ersten kommunizierenden Einheit (CLIENT) begonnen wird;
▪ Ein Erzeugen eines Paars asymmetrischer Schlüssel (KApub, KApriv) der ersten kommunizierenden Einheit (CLIENT).

9. Verfahren, **dadurch gekennzeichnet, dass** die zweite kommunizierende Einheit (SERV) umfasst:
▪ Einen Empfang einer Einlernanforderung, die von einem Erzeugungsverfahren einer Einlernanforderung (REQ_E) gemäß einem der Ansprüche 7 bis 8 erzeugt wird;
▪ Eine Entschlüsselung der Daten der Einlernanforderung (REQ_E) mittels eines privaten Schlüssels (KSpriv) der zweiten kommunizierenden Einheit (SERV);
▪ Einen Vergleich zwischen der empfangenen Nutzerkennung (USER_ID) und dem empfangenen Nutzerpasswort (USER_MDP) mit Daten von Kundenkonten, die in einem Speicher der zweiten kommunizierenden Einheit (SERV) gespeichert sind;
▪ Ein Speichern der Kennung der Ausrüstung (EQ_ID) in einem Speicher der zweiten kommunizierenden Einheit (SERV);
▪ Ein Speichern des öffentlichen Schlüssels (KApub) der ersten kommunizierenden Einheit (CLIENT), der der Kennung der Ausrüstung (EQ_ID) in einem Speicher der zweiten kommunizierenden Einheit (SERV) zugeordnet ist.

10. Verfahren gemäß Anspruch 9, **dadurch gekennzeichnet, dass** die zweite kommunizierende Einheit (SERV) umfasst:
▪ eine Kontrolle eines aktuellen Datums mit einem Referenzdatum;
▪ ein Erzeugen einer Nachricht, die für die erste kommunizierende Einheit (CLIENT) bestimmt ist, die einen spezifischen Code umfasst, der angibt, dass ein Paar asymmetrischer Schlüssel erneuert werden muss;
▪ einen Empfang einer neuen Einlernanforderung, die von der ersten kommunizierenden Einheit gemäß dem Verfahren nach einem der Ansprüche 7 bis 8 erzeugt wird.

11. Kommunizierende Einheit, **dadurch gekennzeichnet, dass** sie wenigstens einen Speicher, einen Rechner und eine Kommunikationsschnittstelle für die Ausführung der Schritte des Kommunikationsverfahrens gemäß irgendeinem der Ansprüche 1 bis 10 umfasst, die von einer und derselben Einheit ausgeführt werden.

12. Computerprogramm, das einen Anweisungssatz für die Umsetzung des Kommunikationsverfahrens irgendeines der Ansprüche 1 bis 10 umfasst.

## Claims

1. A method for communicating between two communicating entities, a first communicating entity generating a data message comprising a payload and an authentication header (TOKEN), said method including:
▪ generating a message identifier (MES_ID) from a given parameter and from a date and inserting the identifier in an authentication header (TOKEN);
▪ inserting a plurality of authentication data comprising at least a user identifier (USER_ID) and an equipment identifier (EQ_ID) in the authentication header (TOKEN);
▪ determining and inserting a security profile (PRO_SEC) in the authentication header (TOKEN) defining the conditions of:
∘ encrypting the payload of the message issued by the first communicating entity;
∘ generating a data signature of the message and of the format of said generated signature;
▪ inserting the payload in the message to be transmitted,
the second communicating entity (SERV) upon receipt of a message from the first communicating entity (CLIENT) decoding the authentication header (TOKEN) so as to:
▪ control the message identifier (MES_ID) to determine if the message has been issued within a predefined lapse of time;
▪ control the user's identifier (USER_ID) and the equipment identifier (EQ_ID) by comparing the value of these parameters with data stored in a memory of the second communicating entity (SERV) to determine if the equipment or the user has been suspended or revoked;
▪ control the encrypting parameter (P1, P3) of the security profile (PRO_SEC) of the received message to decrypt when necessary the payload with the private key of the second communicating entity (SERV);
▪ control, when necessary, the signature parameter (P2, P4) of the security profile (PRO_SEC) of the received message to verify when necessary the signature by means of the public key (KApub) of the first communicating entity (CLIENT).

2. The communicating method according to claim 1, the set of data to be signed comprising a combination of the following data:
▪ the message identifier (MES_ID);
▪ the user identifier (USER_EQ);
▪ a password of a user account (MDP_ID);
▪ the equipment identifier (EQ_ID);
▪ the security profile (PRO_SEC);
▪ a piece of information of headers or of a message data field representative of the payload transfer protocol;
▪ the payload (DATA).

3. The communicating method according to claim 1, the first communicating entity (CLIENT) comprising a memory to store a public key (KSpub) of a second communicating entity (SERVEUR), **characterised in that** the security profile (PRO_SEC) comprises:
▪ a first parameter (P1) indicating the presence or not of an encryption of the payload (DATA) performed from the public key (KSpub) of the second communicating entity (SERVEUR); and
▪ a second parameter (P2) indicating the presence or not of a signature of a set of data to be signed.

4. The communicating method according to claim 1, the first communicating entity (CLIENT) comprising a memory to store a public key (KSpub) of a second communicating entity (SERVEUR), **characterised in that** the security profile (PRO_SEC) comprises:
▪ a first parameter (P1) indicating the presence or not of an encryption of the payload (DATA) performed from a symmetric key and when necessary the presence of an encryption of the symmetric key from the public key (KSpub) of the second communicating entity (SERVEUR); and
▪ a second parameter (P2) indicating the presence or not of a signature of a set of data to be signed.

5. The communicating method according to any of claims 3 and 4, **characterised in that** the security profile (PRO_SEC) comprises:
▪ a third parameter (P3) indicating the presence or not of an encryption performed from the public key (KApub) of the first communicating entity (CLIENT) either of the payload or of a symmetric key; and
▪ a fourth parameter (P4) indicating the presence or not of a signature of a set of data to be signed,
of at least one message requiring to be issued by a second communicating entity (SERVEUR) in response to a message received from the first communicating entity (CLIENT).

6. The communicating method according to claim 5, **characterised in that** the server comprises means for accessing to the memory storing the data corresponding to the client identifiers (USER_ID) and to the equipment identifiers (EQ_ID) so as to revoke or suspend one or more piece of equipment or clients.

7. The communicating method according to one of claims 1 to 6, **characterised in that** it previously comprises executing a method for generating an enrolment request (REQ_E), said enrolment request being generated by a first communicating entity (CLIENT) to a second communicating entity (SERV) and **characterised in that** it comprises:
▪ enabling the enrolment procedure (M1_ENROL_C);
▪ generating an enrolment request (REQ_E) including an identifier of an equipment (EQ_ID), an identifier of the user (USER_ID), a password of the user (USER_MDP) and a public key (KApub) of the first communicating entity (CLIENT);
▪ encrypting the request with a public key (KSpub) of the second communicating entity (SERV) and issuing the enrolment request (REQ_E) by means of a communication interface to the second communicating entity (SERV).

8. The method according to claim 7, **characterised in that** it previously comprises:
▪ creating a user account comprising an identifier (USER_ID) and a password (USER_MDP);
▪ recording the data of said user account in a memory of the second communicating entity (SERV);
▪ acquiring (ACQ_KSpub) a public key (KSpub) of the second communicating entity (SERV) for which the enrolment procedure is engaged from the first communicating entity (CLIENT);
▪ generating a couple of asymmetric keys (KApub, KApriv) of the first communicating entity (CLIENT).

9. The method, **characterised in that** the second communicating entity (SERV) comprises:
▪ receiving an enrolment request generated by a method for generating an enrolment request (REQ_E) according to one of claims 7 and 8;
▪ decrypting the data of the enrolment request (REQ_E) by means of a private key (KSpriv) of the second communicating entity (SERV);
▪ comparing the received user identifier (USER_ID) and the received user password (USER_MDP) with data of client accounts stored in a memory of the second communicating entity (SERV);
▪ recording the equipment identifier (EQ_ID) in a memory of the second communicating entity (SERV);
▪ recording the public key (KApub) of the first communicating entity (CLIENT) associated with the equipment identifier (EQ_ID) in a memory of the second communicating entity (SERV).

10. The method according to claim 9, **characterised in that** the second communicating entity (SERV) comprises:
▪ controlling a current date with a reference date;
▪ generating a message to the first communicating entity (CLIENT) comprising a specific code indicating that a couple of asymmetric keys must be renewed;
▪ receiving a new enrolment request generated by the first communicating entity according to the method of one of claims 7 and 8.

11. A communicating entity, **characterised in that** it comprises at least a memory, a computer and a communication interface for performing the steps of the communicating method according to any of claims 1 to 10 carried out by a same entity.

12. A computer program including a set of instructions for implementing the communicating method of any of claims 1 to 10.
